(19) Europäisches Patentamt

European Patent Office

Office européen des brevets

(11) EP 2 759 894 A1

(12) **EUROPEAN PATENT APPLICATION**

(43) Date of publication:
30.07.2014 Bulletin 2014/31

(21) Application number: 13153101.4

(22) Date of filing: 29.01.2013

(51) Int Cl.:
*G05B 11/36* $^{(2006.01)}$   *G05B 13/04* $^{(2006.01)}$
*G05B 17/02* $^{(2006.01)}$

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: **Siemens Aktiengesellschaft**
**80333 München (DE)**

(72) Inventors:
• **Schofield, John Bradford**
**7042 Trondheim (NO)**
• **Sivalingam, Selvanathan**
**7044 Trondheim (NO)**

(54) **Determining a system delay**

(57) It is described a method (200) for determining a system delay (D) between system input data (101,201) and system output data (103,203), the system output data being supplied to a relay controller (211) which supplies an output of the relay controller to the system as the input data, the method comprising: obtaining the input data (101,201) supplied to the system (209); obtaining the output data (103, 203) output by the system (209) upon supplying the input data (101,201); estimating from the input data and the output data a transfer function (G(ω)) associated with the system, the transfer function describing the effect of the system on the input data to result in the output data; determining a first phase spectrum ($\phi(\omega)$) as the phase of the estimated transfer function (G(ω)); determining a second phase spectrum (argG(ω)) based on an absolute value of the estimated transfer function; finding an extreme of an objective function (J(D)) to obtain the delay (D), the objective function depending on a difference between the first phase spectrum ($\phi(\omega)$) and the second phase spectrum (argG(ω)).

FIG 4

**Description**

Field of invention

The present invention relates to a method and an arrangement for determining a system delay between system input data and system output data and further relates to a method for tuning a controller and to a method of controlling a technical system using the tuned controller which has been tuned according to a method for determining a system delay.

Art Background

There may be many methods available in the prior art to estimated time delay between input and output for open loop systems, i.e. systems, wherein a system output is not fed back as a system input. However, under closed-loop situations, i.e. wherein a system output is fed back to the system as a system input, delay estimation may be done only, if there is an external excitation, i.e. an excitation in an input signal, i.e. a varying input signal. Also, it may be a usual practice to assume time delay or a range of time delay values while estimating minimum variants from routine operating data. In particular, in the prior art there is no automatic procedure to estimate delay accurately in the presence of noise which is often present in system data or plant data, in particular plant output data or system output data.

There may be a need for a method and for an arrangement for determining a system delay between system input data and system output data in which the system output data is fed back to represent system input data, wherein the delay may be accurately be determined, even in the presence of noisy data. Further, there may be a need for a method for tuning a controller, in particular to adjust or tune the controller in order to be able to control a system having a system delay. Further, there may be a need for a method of controlling a technical system, wherein the controlling is more accurate.

Summary of the Invention

The above-mentioned need may be solved by the subject-matter of the independent claims which are directed to a method and to an arrangement for determining a system delay. Advantageous embodiments of the present invention are described by the dependent claims.

According to an embodiment of the present invention, it is provided a method for determining a system delay between system input data and system output data, the system output data being supplied to a relay controller which supplies an output of the relay controller to the system as the input data. Thereby, the method comprises: obtaining the input data supplied to the system, obtaining the output data output by the system upon supplying the input data, estimating from the input data and the output data a transfer function associated with the system, the transfer function describing the effect of the system on the input data to result in the output data, determining a first phase spectrum as the phase of the estimated transfer function, determining a second phase spectrum based on an absolute value of the estimated transfer function, and finding an extreme of an objective function to obtain the delay, the objective function depending on a difference between the first phase spectrum and the second phase spectrum.

The system may represent any technical system or technical process which upon providing input data produces some output data. The input data and/or the output data may for example be scalar values changing with time or may for example be or comprise one or more components, such as representing vector quantities, which may change with time. For example, the system may for example comprise a heater (or pump) which upon providing the input data generates a particular temperature (or pressure of flow rate) of a substance which is output as the output data.

When supplying a particular input data to the system, it may take a particular time interval or timespan, i.e. the delay, in order to affect the output data, e.g. a temperature change or a pressure change or a flow rate change. Thereby, in particular, when controlling the system is required or desired, in order to achieve an output value or output data corresponding to reference data, the delay may be required to be known, in order to configure or tune a controller which may generate the input signal depending on an error signal which may be a difference between the system output and a reference value. In particular, the reference value may for example represent a desired temperature, a desired pressure, a desired flow rate, a desired frequency or any other physical quantity which may be produced or influenced by the system when the input data is supplied to the system.

For example, the system may relate to a pharmaceutical process, a physical process, a chemical process, a biological process, an electro/mechanical process or any other technical process. In particular, the process may relate to an offshore process, wherein in particular one or more pumps may be controlled and wherein in particular one or more compressors may be controlled, in order to achieve a particular pressure, a particular flow rate, a particular temperature, etc. of a fluid, such as oil or gas.

The relay controller may be a particular controller (e.g. electronic circuit or (programmable) arithmetic/logical processor) which may selectively a output two different output signals (according to two states), one being a (constant) signal (e.g. 'h') above a reference or nominal signal and the other being a (constant) signal (e.g. '-h') below the nominal signal. In particular, the nominal signal may be zero or may represent zero.

The relay controller may supply the signal corresponding to the first state, in particular representing a fixed signal strength or signal magnitude to the system as the input data. Based on the input data, the system may generate output data, such as a particular pressure value, a particular temperature value, a particular flow rate value, a particular frequency, etc., depending on the application and the system. The output data may be fed back to the relay controller which may receive the output data as an input. When the output data are above a nominal output signal, the relay controller may not change the input data which are supplied to the system but may keep the input data to the system constant. However, when the output data fall below the nominal output value or output quantity, the relay controller may change the input data supplied to the system to switch to the second state, for example a particular signal magnitude or signal strength below the nominal input data.

Thereby, the relay controller may sense when the output data output from the system crosses a particular border, such as a nominal output value. When this crossing of the output data occurs, the relay controller may in turn switch the input data to alternate between the two states. Thereby, the switching of the input data may be dependent on the delay the system is effecting. Thereby, the relay controller may automatically adjust the oscillation frequency of the input signal being represented by the switching of the input signal between the two states, i.e. a state having a signal magnitude above a nominal input value and another state having a signal strength or magnitude below a nominal magnitude such that the oscillation frequency complies with the system delay.

The method may in particular be performed when an equilibrium has been reached such that the input data are switched with a particular frequency which may have been evolved depending on the delay produced by the system.

The input data and/or the output data may be measured or may be estimated or may be obtained in another manner. The transfer function (which may be complex valued, i.e. having, for a given frequency, a real value and an imaginary value) may also be referred to as a response function describing the action of the system depending on the input data to produce the output data. The transfer function as well as the first phase spectrum and the second phase spectrum may be defined in a frequency space, i.e. a space which may be obtained from a time domain space by Fourier transformation, for example.

Further, the transfer function may be estimated across a number of frequencies, in particular across a particular frequency range. The frequency range may in particular be depending on a frequency of the input data when the equilibrium has been reached, as is explained above.

The first phase spectrum may comprise information regarding the delay introduced by the system, while the second phase spectrum will not contain any information regarding the delay introduced by the system, since it may be obtained from a Hilber transform of the amplitude spectrum. Thereby, forming a difference between the first phase spectrum and the second phase spectrum may be indicative of the delay.

In particular, the precise amount of the delay may be estimated from the difference between the phase spectrum of the minimum phase system (estimated from the Hilbert transform relations) and the phase spectrum of the compound system (estimated from the argument of the cross-spectrum, directly from the input-output data).

In particular, the method may be applied when the output data are noise affected or the output data are very noisy, e.g. where there are measurement errors. In this case, the output data may only with low accuracy represent or be indicative for the delay. In particular, by analyzing the noisy output data and the input data, it may be difficult according to conventional procedures to determine the delay introduced by the system. However, when the extreme of the objective function is found, the delay may also be determined in the case where the output data are relatively noisy.

Thereby, tuning a controller may be simplified and the tuning parameters may be determined with higher accuracy compared to conventional methods.

According to an embodiment of the present invention, the first phase spectrum and second phase spectrum is determined only at dominant frequencies, wherein the input signal represented in a frequency space comprises amplitudes at the dominant frequencies that are higher than a threshold, the threshold being in particular between 0.3 and 0.8 of a highest amplitude of the input data when represented in the frequency space.

Dominant frequencies may represent frequencies which have high amplitudes in the input signal when the input signal is represented in frequency space or Fourier space.

Frequencies other than the dominant frequencies may have little influence on the determination of the delay, since its associated amplitudes of the input data may be relatively low. By restricting the frequencies at the dominant frequencies, computational efforts may be reduced without sacrificing much of the achievable accuracy of the determination of the delay.

According to an embodiment of the present invention, the second phase spectrum is computed as a double sum of a logarithm of the absolute value of the estimated transfer function multiplied by a sum of two trigonometric functions each depending on two mutually different frequencies, the double sum running across the two mutually different frequencies, in particular only comprising the dominant frequencies.

A double sum may be a sum which carries two indices over which the sum is performed. The sum may run across discrete or continuous frequencies. When the input data and/or the output data are periodic, the input data and/or output data may be expanded in a Fourier sum comprising discrete frequencies or frequencies at discrete positions which may be integer multiples of a basic frequency, such as the oscillation frequency of the input data. Thereby, the method may be simplified.

The trigonometric functions may in particular be the cot-function.

The second phase spectrum estimate may be computed by taking the Hilbert transform of the amplitude spectrum obtained from the input-output data. This may provide an estimate of the phase spectrum which includes no effects of the time delay of the system.

According to an embodiment of the present invention, finding the extreme comprises varying the delay across a range of values, wherein prior knowledge is used for defining the range of values.

Since the delay is found by direct evaluation of a cost function for a range of values, the range can be chosen e.g. between zero and a delay value much larger than the expected value.

According to an embodiment of the present invention, the objective function comprises a sum of a trigonometric function having an argument depending on a difference between the first phase spectrum and the second phase spectrum at a particular frequency, the sum running across different frequencies, in particular only comprising the dominant frequencies.

The trigonometric function within the objective function may for example be the cos-function or the sin-function. The argument of the trigonometric function may comprise three terms, in particular the cos of the phase of the estimated transfer function, the second phase spectrum and the delay times the considered frequency. Thereby, the method may be easily implemented and simplified.

According to an embodiment of the present invention, the argument is given by the difference between the first phase spectrum and the second phase spectrum from which the frequency multiplied by the delay is subtracted. This may stem from the fact that the phase spectrum estimated directly from the data includes time delay information, while the phase estimate obtained from the Hilbert transform of the amplitude spectrum may not. Therefore, the difference between these spectral estimates may be the phase contribution from the time delay.

Finding the extreme of the objective function may in particular comprise maximizing the objective function, in particular when the trigonometric function within the objective function is the cos-function.

Thereby, maximizing the objective function and thereby finding the delay may be simplified.

According to an embodiment of the present invention, the different frequencies are within a frequency range defined to be between 0.2 and 1.0 times a basic frequency of the input data produced by the relay controller.

The frequency range may in general be the frequency range provided by the Fourier transform, i.e. from 0 to half of the sampling frequency of the data.

In particular, the objective function may be evaluated at at least one frequency, in particular a main frequency of the dominant frequencies. Evaluating the objective function at more than one frequency may improve or enhance the accuracy of the determination of the delay.

According to an embodiment of the present invention, in the sum, frequencies at which amplitudes of the Fourier transformed input data are lower than a threshold are weighted lower than frequencies at which amplitudes of the Fourier transformed input data are higher than the threshold.

Thereby, a simple scheme for selecting frequencies may be provided which may simplify evaluation and maximizing the objective function.

According to an embodiment of the present invention, a weighting of different summands in the sum of differences is based on coherence functions. Weighting the different summands may also improve the accuracy of the method.

According to an embodiment of the present invention, estimating the transfer function comprises: determining a first function as a Fourier transform of a cross-correlation between the input data and the output data, determining a second function as a square of a Fourier transform of the input data, and computing the estimated transfer function as being proportional to the first function divided by the second function.

The cross-correlation between the input data and the output data may be an integral of a product, the product comprising the input data and shifted (in time) output data. Thereby, estimating the transfer function may be enabled and simplified.

According to an embodiment of the present invention, the relay controller receives the system output data and produces an output signal that flips between two states, wherein the states are switches when the received system output changes sign (or crosses a border or a particular nominal output value).

The output signal of the controller may flip between the two states when the received system output crosses a nominal system output, for example zero. In particular, the relay controller may produce a square wave signal which may be supplied to the system and the system may output output data varying according to a smooth curve, such as a curve close or similar to a sine curve or a cosine curve. In particular, the output data may at least oscillate between an upper and a lower limit value and may in particular cross a line in the middle between the upper limit value and the lower limit value. In particular, this line in the middle between the upper limit value and the lower limit value may represent a nominal (or mean or average) output value. The relay controller may switch its output (which is supplied to the system) when the output data crosses the line between the upper limit value and the lower limit value of the output data.

According to an embodiment of the present invention, obtaining the output data comprises measuring the output data. Thereby, estimating the transfer function may be performed for any system which produces the output data.

According to an embodiment of the present invention it is provided a method for tuning a controller, in particular PID controller, for controlling a system, the method comprising: performing a method according to one of the preceding embodiments for determining a system delay of the system; determining, using the determined delay, other parameters of a system model modelling the system; and using a model based tuning procedure to calculate controller parameters based on the system model.

Tuning the controller may comprise adjusting or setting at least one parameter defining the behaviour of the controller. In particular, all parameters defining the behaviour of the controller may be tuned or adjusted according to this embodiment. The PID-controller may comprise a proportional element, an integrative element and a differential element, which may be arranged in a series or in parallel. Thereby, an error signal which may be supplied to the controller may first be multiplied by a constant term (the P-element), may (then or in parallel) integrated across a particular time range (within the integrative element) and may (then or in parallel) be differentiated (in the D-element). In particular, the P-element, the I-element and the D-element may be arranged in a series or in parallel and a controller output may for example be represented as a sum of an output of the P-element, the I-element and the D-element.

Thereby, a relatively large class of controllers may be supported by the tuning method. In particular, the closed-loop plant response pattern may comprise an oscillation period and an amplitude which may be measured for PID-controller tuning. Further, from the amplitude of the input data and the amplitude of the output data, the ultimate gain of the controller may be computed. Furthermore, other PID-controller tuning parameters may be obtained from known relations, in particular for the cases that the controller is a pure P-controller, for the case where the controller is a pure PI-controller and for the case where the controller is a PID-controller.

According to an embodiment of the present invention, it is provided a method of controlling a technical system, the method comprising: tuning a controller according to an embodiment as described above, connecting an output of the controller to an input of the system, and supplying as input to the controller a difference between a reference signal and a system output.

The technical system may be any technical system which receives an input signal (such as an electrical and/or optical and/or wireless signal, in particular used for controlling an actuator of the system, such as a pump, a heater, a compressor, a motor, etc.) and generates an output signal, such as a pressure value, a flow rate value, a temperature value or the like. The input data may be represented by an electrical and/or optical signal or by an electromagnetic wave.

It should be understood that features which are individually or in any combination disclosed, described, mentioned, or applied to a method for determining a system delay between system input data and system output data may also be applied to an arrangement for determining a system delay between system input data and system output data according to an embodiment of the present invention and vice versa.

According to an embodiment of the present invention, it is provided an arrangement for determining a system delay between system input data and system output data, the system output data being supplied to a relay controller which supplies an output of the relay controller to the system as the input data, the arrangement comprising: an input port for obtaining the input data supplied to the system and for obtaining the output data output by the system upon supplying the input data; a processor adapted to estimate from the input data and the output data a transfer function associated with the system, the transfer function describing the effect of the system on the input data to result in the output data, to determine a first phase spectrum as the phase of the estimated transfer function, to determine a second phase spectrum based on an absolute value of the estimated transfer function, and to find an extreme of an objective function to obtain the delay, the objective function depending on a difference between the first phase spectrum and the second phase spectrum.

The arrangement or the processor may for example comprise a (semiconductor) circuit which may in particular be programmable, using a conventional computer language, such as C, C++, JAVA, Perl, Python or the like. The arrangement may be connected for obtaining the input data to the relay controller and may be connected for obtaining the output data to a system output terminal. The processor may perform all kinds of computations, including Fourier transformation, cross-correlation, maximizing procedures, summation methods and so on. The found delay may be output and/or may be stored in an electronic storage. Further, based on the determined delay, other tuning parameters of the controller which may be designed for controlling the system may then be determined using the processor.

Any a priori information on the time delay may be useful for the system identification procedures. The accurate value of the time delay may be very much essential to estimate minimum variants and thereby Harris index. Based on the value of the Harris index, poorly performing control loops may be identified and immediately considered for route course diagnosis. Although relay-based auto tuning methods is in practice for more than two decades, the data obtained from this has not been used for ranking of control loops which here should be treated novel. According to an embodiment a tool for performance assessment of control loops may be developed by knowing the value of the time delay.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Embodiments of the present invention are now described with reference to the accompanying drawings. The invention is not limited to the illustrated or described embodiments.

Brief Description of the Drawings

Fig. 1 schematically illustrates an arrangement for determining a system delay according to an embodiment of the present invention;

Fig. 2 schematically illustrates a method for determining a system delay according to an embodiment of the present invention which may be performed by the arrangement illustrated in Fig. 1;

Fig. 3 illustrates a graph showing input data and output data under noiseless conditions;

Fig. 4 illustrates plant input data and plant output data under noisy conditions which have been used in a method for determining a system delay, such as the method illustrated in Fig. 2; and

Fig. 5 schematically illustrates a method of controlling a technical system according to an embodiment of the present invention.

Detailed Description

The illustration in the drawings is in schematic form. It is noted that in different figures, similar or identical elements are provided with the same reference signs or with reference signs, which are different from the corresponding reference signs only within the first digit.

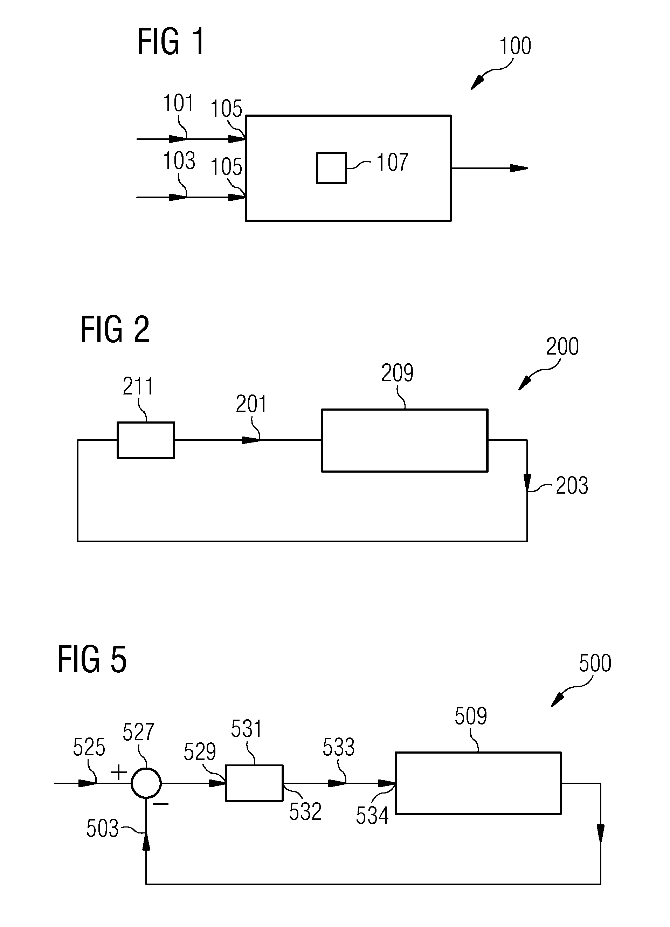

Fig. 1 schematically illustrates an arrangement 100 for determining a system delay between system input data 101 and system output data 103 which are received at the arrangement 100 at an input port 105.

The arrangement 100 further comprises a processor 107 which is adapted to estimate from the input data 101 and the output data 103 a transfer function as will be described below, wherein the transfer function describes an effect of the system, such as system 209 illustrated in Fig. 2 on the input data 101, 201 to result in the output data 103, 203. Further, the processor 107 is adapted to determine a first phase spectrum as the phase of the estimated transfer function and to determine a second phase spectrum based on an absolute value of the estimated transfer function. Further, the processor 107 is arranged or adapted to find an extreme of an objective function to obtain the delay, the objective function depending on a difference between the first phase spectrum and the second phase spectrum.

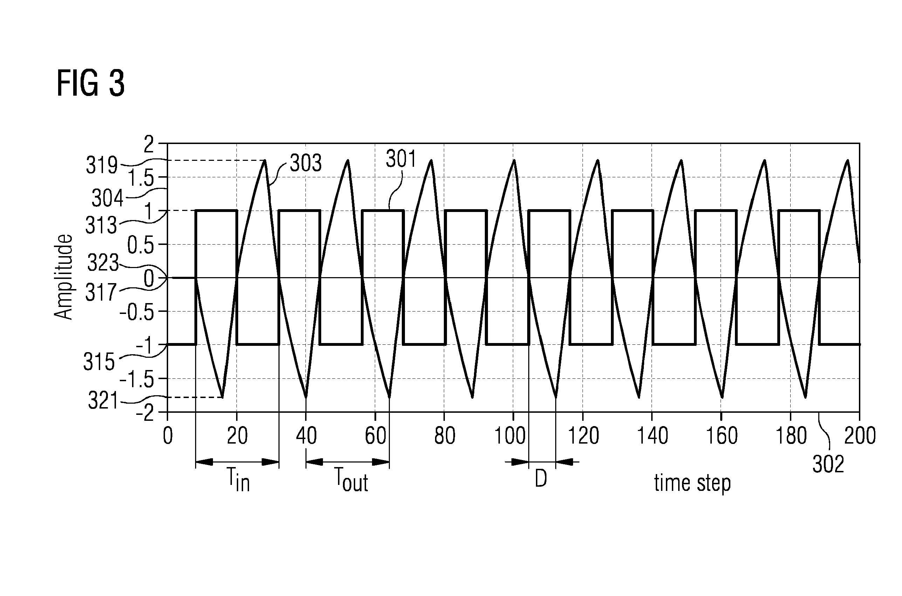

Fig. 2 schematically illustrates a method 200 for determining a system delay according to an embodiment of the present invention. The method 200 uses a relay controller 211 which produces the input data 201 and supplies the input data to the system 209 whereupon the system 209 outputs the output data 203 which are fed back to the relay controller 211. Under ideal conditions, e.g. no measurement errors are involved to obtain the input data 201 and the output data 203, the input data and output data may for example take the form as is illustrated in Fig. 3.

An abscissa 301 in Fig. 3 denotes the time steps, while an ordinate 303 in Fig. 3 denotes an amplitude of the input signal 201 and the output signal 203, respectively, wherein the input signal is illustrated as a curve 301 while the output signal is illustrated by the curve 303. As can be taken from Fig. 3, the input data 301 exhibit a square wave pattern having an upper value 313 and a lower value 315 and having a nominal input value 317 which is in the illustrated case at zero. Further, the input data 301 oscillate with a period $T_{in}$. The input data 301 are generated by the relay controller 211 illustrated in Fig. 2 to alternate between the signal state 313 and the signal state 315, thereby forming a square wave pattern.

The output signal 303 or output data 303 is generated by the system 209 upon supplying the input data 301 and oscillates between an upper output value 319 and a lower output value 321 and crosses a nominal output value 323 when oscillating between the extreme output signals 319, 321. Further, also the output signal 301 comprises an oscillation period which is denoted by $T_{out}$ which equals the oscillation period $T_{in}$ of the input data 301. From the curves 301, 301 illustrated in Fig. 3, the delay of eight time steps (D = 8 time steps) is obtainable, wherein the delay is labelled with the reference sign D.

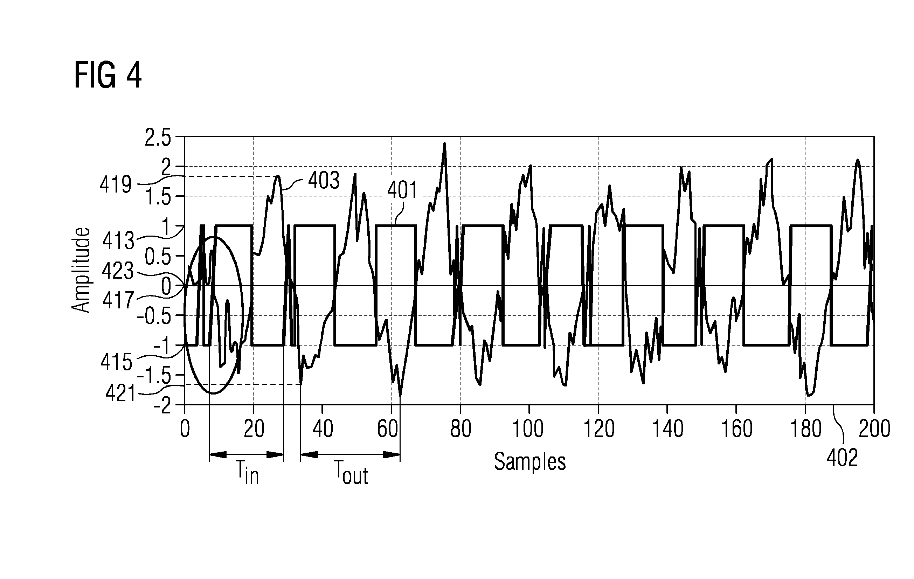

A real system, however, does not allow to measure or obtain the input data and the output data without any noise and a more realistic representation of the input data and the output data is illustrated in Fig. 4 showing on an abscissa 402 the time steps and on an ordinate 404 the amplitude of the respective data.

Thereby, the input data are labelled with reference sign 401 and the output data which here comprise noise are labelled with reference sign 403. The input data 401 have an upper input limit 413 and a lower input limit 415 and have a repetition period $T_{in}$. The output data 403 lie between the upper output limit 419 and the lower output limit 421 and oscillate between them having a repetition period $T_{out}$ which equals the repetition period $T_{in}$ of the input data 401. However, from Fig. 4 alone the delay D is not obtainable because of the noisy data.

According to an embodiment of the present invention, the precise amount of the delay may be estimated from the difference between the phase spectrum of the minimum phase system (estimated from the Hilbert transform relations) and the phase spectrum of the compound system (estimated from the argument of the cross-spectrum, directly from input-output data).

In a first step from the input data u (101, 201) and the output data y (103, 203), the power spectra $P_{uu}$ ($\omega$), $P_{yy}$ ($\omega$) and the cross-spectral power density function $P_{uy}$ ($\omega$) are estimated or calculated by the processor 107 illustrated in Fig. 1.

In a second step, the frequency response function or transfer function

$$\hat{G}(\omega) = \frac{P_{uy}(\omega)}{P_{uu}(\omega)}$$

is estimated by the processor 107.

Further, in a third step, the dominant frequency components are found by estimating coherence functions, $\beta(\omega)$, between the input data u (101, 201) and the output data y (103, 203).

In a fourth step, the gain spectrum

$$|\hat{G}(\omega)|$$

and the phase spectrum

$$|\widehat{\emptyset}(\omega)|$$

are estimated at dominant frequencies.

Thereupon, in a fifth step, the minimum phase estimate of the argument of the transfer function is found from

$$arg\hat{G}(\omega_l) = \frac{1}{2M}\sum_{k=1,k\neq l}^{M} log\,|\hat{G}(\omega_k)|\left[\cot\frac{(\omega_l-\omega_k)}{2} + \cot\frac{(\omega_l+\omega_k)}{2}\right]$$

In a last step, the objective function

$$J(D) = \sum_B \frac{\beta^2(\omega)}{1-\beta^2(\omega)}\left[\cos\{\widehat{\emptyset}(\omega) - arg\hat{G}(\omega) - D\omega\}\right]$$

is maximized by varying the delay D over a range of values (wherein any prior knowledge of the range may be used) to find the time delay D between the input data u (101, 201) and the output data y (103, 203). In the above sum, the quantity B represents a range of the dominant frequencies in the signals.

The method has been validated defining a system containing first order plus time delay model, according to

$$G(z^{-1}) = \frac{0.3155}{1 - 0.8948z - 1} z^{-1}$$

Herein, the relay amplitude has been selected to be 1. Input-output profiles are shown in the Figs. 3 and 4 for noiseless and noisy conditions, respectively. Thereby, visual inspection of the noiseless condition (see Fig. 3) enables to exactly find the time delay between the input data and the output data to be 8 time steps. However, it was not possible to visually detect the time delay D in the noisy condition (see Fig. 4) which is generally the case in plants or systems or respective input data and output data. However, the method of determining the delay according to an embodiment of the present invention essentially yields the time delay D has a value of accurately 8 time steps.

Fig. 5 schematically illustrates a method 500 of controlling a technical system 509 according to an embodiment of the present invention. Thereby, the method 500 controls the system 509 which may be identical to the system 209 for which the delay has been determined according to the method illustrated in Fig. 2 and according to the data illustrated in Figs. 3 and 4.

The method 500 uses a reference value 425 which may for example a reference value for a temperature, for a pressure, for a flow rate or so on, in particular related to an offshore-process or method. The reference value is supplied to an addition element 427 which subtracts from the reference value 425 an output signal 403 which is output by the system 509. The difference between the reference value 225 and the output signal 503, i.e. the error value 529 is supplied to a PID-controller 531 which has been tuned according to an embodiment of the present invention using the delay D of the system 209, 509. In particular, all the controller parameters of the controller 531 have been adjusted based on the delay D, the amplitude of the output data, using one of the many available model based tuning methods available, such as Internal Model Control.

For example: If process gain, $K_p$, and process time constant, $\tau$ are known by other means, time delay D may be estimated by the suggested method. According to an exemplary embodiment the controller parameters for different values of $D/\tau$ may be obtained according to the following Table 1:

Table 1:

| | $D/_\tau$<0.1 | $0.1 \leq D/_\tau \leq 1$ | $D/_\tau$>1 |
|---|---|---|---|
| Method | TL | ITAE | IMC |
| | | | $\lambda = \max(1.7D, 0.2\tau)$ |
| | $K_C = \dfrac{K_u}{3.2}$ | $K_C = \dfrac{0.586}{K_p}\left(\dfrac{\tau}{D}\right)^{0.916}$ | $K_C = \dfrac{\tau + \dfrac{D}{2}}{K_p\lambda}$ |
| | $\tau_l = 2.2P_u$ | $\tau_l = \dfrac{\tau}{1.03 - 0.165\left(\dfrac{D}{\tau}\right)}$ | |
| | | | $\tau_l = \tau + \dfrac{D}{2}$ |

The controller 531 produces based on the error signal 529 a control signal 533 (at a controller output 532) which is supplied to the system 509 (at input terminal 534) such that ideally the output signal 503 equals to the reference value or reference signal 525. Thus, the controller 531 has been successfully tuned such that the error signal 529 essentially vanishes.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. Method (200) for determining a system delay (D) between system input data (101,201) and system output data (103,203), the system output data being supplied to a relay controller (211) which supplies an output of the relay controller to the system as the input data, the method comprising:

    obtaining the input data (101,201) supplied to the system (209);
    obtaining the output data (103, 203) output by the system (209) upon supplying the input data (101,201);
    estimating from the input data and the output data a transfer function $(G(\omega))$ associated with the system, the transfer function describing the effect of the system on the input data to result in the output data;
    determining a first phase spectrum $(\phi(\omega))$ as the phase of the estimated transfer function $(G(\omega))$;
    determining a second phase spectrum $(argG(\omega))$ based on an absolute value of the estimated transfer function;
    finding an extreme of an objective function $(J(D))$ to obtain the delay (D), the objective function depending on a difference between the first phase spectrum $(\phi(\omega))$ and the second phase spectrum $(argG(\omega))$.

2. Method according to claim 1,
    wherein first phase spectrum $(\phi(\omega))$ and second phase spectrum $(argG(\omega))$ is determined only at dominant frequencies, wherein the input signal represented in a frequency space comprises amplitudes at the dominant frequencies that are higher than a threshold, the threshold being in particular between 0.3 and 0.8 of a highest amplitude of the input data when represented in the frequency space.

3. Method according to claim 1 or 2,
    wherein the second phase spectrum $(argG(\omega))$ is computed as a double sum of a logarithm of the absolute value of the estimated transfer function multiplied by a sum of two trigonometric functions each depending on two mutually different frequencies, the double sum running across the two mutually different frequencies, in particular only comprising the dominant frequencies.

4. Method according to one of the preceding claims,
    wherein finding the extreme comprises:

    varying the delay (D) across a range of values, wherein prior knowledge is used for defining the range of values.

5. Method according to one of the preceding claims, wherein the objective function $(J(D))$ comprises a sum of a trigonometric function having an argument depending on a difference between the first phase spectrum and the second phase spectrum at a particular frequency, the sum running across different frequencies, in particular only comprising the dominant frequencies.

6. Method according to claim 5,
    wherein the argument is given by the difference between the first phase spectrum $(\phi(\omega))$ and the second phase spectrum $(argG(\omega))$ from which the frequency multiplied by the delay is subtracted.

7. Method according to claim 5 or 6,
    wherein the different frequencies are within a frequency range defined to be between 0.2 and 1.0 times a basic frequency of the input data (101,201) produced by the relay controller (211).

8. Method according to one of claims 5 to 7,
    wherein, in the sum, frequencies at which amplitudes of the Fourier transformed input data (101,201) are lower than a threshold are weighted lower than frequencies at which amplitudes of the Fourier transformed input data are higher than the threshold.

9. Method according to one of claims 5 to 8,
    wherein a weighting of different summands in the sum of differences is based on coherence functions.

10. Method according to one of the preceding claims,
    wherein estimating the transfer function $(G(\omega))$ comprises:

    determining a first function $(P_{uy}(\omega))$ as a Fourier transform of a cross-correlation between the input data and the output data,

determining a second function ($P_{uu}(\omega)$) as a square of a Fourier transform of the input data;
computing the estimated transfer function ($G(\omega)$) as being proportional to the first function divided by the second function.

11. Method according to one of the preceding claims, wherein relay controller (211) receives the system output data (303,203) and produces an output signal (201) that flips between two states (313,315), wherein the states are switches when the received system output (303) changes sign.

12. Method according to one of the preceding claims, wherein obtaining the output data (103,203) comprises measuring the output data.

13. Method for tuning a controller (531), in particular PID controller, for controlling a system, the method comprising:

performing a method according to one of the preceding claims for determining a system delay (D) of the system (209, 309) ;
determining, using the determined delay (D), other parameters of a system model modelling the system; and
using a model based tuning procedure to calculate controller parameters based on the system model.

14. Method (500) of controlling a technical system (509), the method comprising:

tuning a controller (531) according to the method of claim 13;
connecting an output (532) of the controller (531) to an input (534) of the system (509);
supplying as input (529) to the controller (531) a difference between a reference signal (525) and a system output (503).

15. Arrangement (100) for determining a system delay between system input data and system output data, the system output data being supplied to a relay controller which supplies an output of the relay controller to the system as the input data, the arrangement comprising:

an input port (105) for obtaining the input data (101) supplied to the system and for obtaining the output data (103) output by the system upon supplying the input data;
a processor (107) adapted to
estimate from the input data and the output data a transfer function ($G(\omega)$) associated with the system (209,509), the transfer function describing the effect of the system on the input data to result in the output data,
to determine a first phase spectrum ($\phi(\omega)$) as the phase of the estimated transfer function ($G(\omega)$),
to determine a second phase spectrum ($\arg G(\omega)$) based on an absolute value of the estimated transfer function, and
to find an extreme of an objective function ($J(D)$) to obtain the delay (D), the objective function depending on a difference between the first phase spectrum and the second phase spectrum.

# FIG 1

# FIG 2

# FIG 5

FIG 3

EP 2 759 894 A1

FIG 4

EP 2 759 894 A1

Europäisches
Patentamt

European
Patent Office

Office européen
des brevets

## EUROPEAN SEARCH REPORT

Application Number

EP 13 15 3101

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | I. GUSTAVSSON: "Comparison of different methods for identification of industrial processes", AUTOMATICA, vol. 8, no. 2, 1 March 1972 (1972-03-01), pages 127-142, XP055064178, ISSN: 0005-1098, DOI: 10.1016/0005-1098(72)90061-1 * paragraph [02.2] * ----- | 1-15 | INV. G05B11/36 G05B13/04 G05B17/02 |
| | | | TECHNICAL FIELDS SEARCHED (IPC) |
| | | | G05B |

The present search report has been drawn up for all claims

| Place of search | Date of completion of the search | Examiner |
|---|---|---|
| The Hague | 29 May 2013 | Salvador, Didier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)